## Europäisches Patentamt

## European Patent Office

## Office européen des brevets

(19)

(11) Veröffentlichungsnummer: **0 045 393**
**B1**

# (12) EUROPÄISCHE PATENTSCHRIFT

(45) Veröffentlichungstag der Patentschrift:
**20.06.84**

(21) Anmeldenummer: **81105336.2**

(22) Anmeldetag: **09.07.81**

(51) Int. Cl.³: **C 08 L 71/02, C 08 G 18/28,
C 08 G 18/48, C 08 G 18/66,
C 08 G 18/79**

(54) **Polyether-polyol-Mischungen und deren Verwendung.**

(30) Priorität: **01.08.80 DE 3029204**

(43) Veröffentlichungstag der Anmeldung:
**10.02.82 Patentblatt 82/6**

(45) Bekanntmachung des Hinweises auf die Patenterteilung:
**20.06.84 Patentblatt 84/25**

(84) Benannte Vertragsstaaten:
**BE DE FR GB IT**

(56) Entgegenhaltungen:
**CH - A - 527 865
DE - A - 2 031 882
DE - A - 2 037 691**

(73) Patentinhaber: **BASF Aktiengesellschaft,
Carl-Bosch-Strasse 38, D-6700 Ludwigshafen (DE)**

(72) Erfinder: **Nissen, Dietmar, Dr., Ziegelhäuser
Landstrasse 31, D-6900 Heidelberg (DE)**
Erfinder: **Bueltjer, Uwe, Dr., Dagobertstrasse 8,
D-6700 Ludwigshafen (DE)**
Erfinder: **Hutchison, John, Dr., Hans-Willmann-Strasse 8,
D-6706 Wachenheim (DE)**

# Beschreibung

Die Erfindung betrifft Mischungen aus reinen und rohen Polyether/Polyolen, vorzugsweise im Gewichtsverhältnis von 1 :99 bis 50:50, die zur Erzielung einer optimalen Vermischung, zur Verminderung der Reaktivität und Verbesserung der Lagerstabilität Fettsäureester oder Fettsäureestergemische in einer Menge von 0,002 bis 0,05 mol/100 g Polyether/Polyole enthalten, sowie deren Verwendung zur Herstellung von vorzugsweise massiven Polyisocyanuratmassen.

Die Herstellung von Polyalkylenethern durch Polymerisation von Alkylenoxiden, die an ein Startermolekül mit reaktionsfähigen Wasserstoffatomen in Gegenwart von alkalischen Katalysatoren addiert werden, ist bekannt. Man erhält Polyalkylenether mit freien Hydroxylgruppen, von denen ein Teil aufgrund der alkalischen Katalysatoren endständige Alkoholatgruppen trägt. Für die weitere Verwendung der Polyalkylenether ist es notwendig, die Alkoholatreste in freie Hydroxylgruppen überzuführen, und zwar so, dass die Polyether/Polyole praktisch keine anorganischen Bestandteile mehr enthalten, die sich durch Veraschung oder Puffereffekte nachweisen lassen.

Im allgemeinen werden hierzu die alkalihaltigen Polyether/Polyole mit anorganischen oder organischen Säuren neutralisiert, wobei sich Emulsionen aus wässerigen Salzlösungen und Polyether/Polyolen bilden. Anschliessend wird das Wasser der Emulsionen unter fortlaufender Temperatursteigerung abdestilliert. Die verbleibenden, im Polyether/Polyol ausfallenden Salze werden mechanisch abgetrennt. Verwendet man zur Neutralisation der Polyether/Polyole anorganische Säuren wie Schwefelsäure, Phosphorsäure, Salzsäure, sauer reagierende Salze wie Kaliumhydrogenphosphat oder organische Säuren, wie Zitronensäure, Tartronsäure, u.a., so muss genau bis zum Äquivalenzpunkt neutralisiert werden, um auf der einen Seite ein Minimum an basischen Restalkalisalzen oder auf der anderen Seite ein Minimum an Säureüberschuss zu erhalten. Ferner fällt das Alkalisalz häufig in so feinen Kristallen aus, dass die Filtration, trotz Verwendung von Filtrierhilfsmitteln Schwierigkeiten bereitet. Daneben können, insbesondere bei der Verwendung von Schwefelsäure, Verfärbungen der Polyether/Polyole auftreten.

Die Schwierigkeit, den Äquivalenzpunkt bei der Neutralisation exakt einstellen zu müssen, kann nach Angaben der US-PS Nr. 3016404 durch die Verwendung einer flüchtigen Säure, wie Chlorwasserstoff, beseitigt werden. Hierbei wird der Chlorwasserstoffüberschuss als Gas abdestilliert. Das Verfahren besitzt den Nachteil, dass der Chlorwasserstoff stark korrodierend auf das Gefässmaterial einwirkt und das überschüssige Gas zur Vermeidung von Luftverschmutzung mit Hilfe von kostspieligen Absorptions- und Waschtürmen abgetrennt oder vernichtet werden muss.

Nach Angaben der GB-PS Nr. 877269 werden zur Neutralisation der Polyether/Polyole mit Säuren behandelte Erden verwendet. Nachteilig bei diesem Verfahren ist die Handhabung der Feststoffe, die insbesondere bei grösseren Reaktionsansätzen Schwierigkeiten bereiten kann, da bis ca. 4 Gew.-% solcher Erden, bezogen auf das Polyether/Polyol-Gewicht, zur Neutralisation der Polyether/Polyole erforderlich sind. Um ein klares Filtrat zu erhalten, muss zum Abfiltrieren derartiger Erden ein sehr dichtes Filtermaterial verwendet werden, was wiederum lange Filtrationszeiten zur Folge hat.

Zur Reinigung der Produkte wurde ferner vorgeschlagen, die Polyether/Polyole mit einem wasserunlöslichen Lösungsmittel zu verdünnen und die erhaltene Lösung mit Wasser auszuwaschen. Durch die anschliessende Lösungsmittelregenerierung wird das Verfahren jedoch apparativ aufwendig. Eine andere Schwierigkeit bereitet die leichte Emulsionsbildung.

Apparativ aufwendig undkostspielig sind auch Verfahren, die zur Neutralisation der Reaktionslösung Ionenaustauscher verwenden. Diese müssen durch langwierige Filtration abgetrennt werden. Eine Regenerierung ist meist noch kostspieliger als das Verwerfen, wobei jedoch beträchtliche Produktverluste durch anhaftendes Polyol auftreten.

Zur Entfernung des basischen Katalysators ist ferner vorgeschlagen worden, die Reaktionslösung mit Kohlendioxid zu neutralisieren und anschliessend unter vermindertem Druck zu entwässern. Das Verfahren weist den Nachteil auf, dass der basische Katalysator oft unvollständig neutralisiert wird, das entstehende Alkalicarbonat wegen der feinen Partikelgrösse sehr schlecht filtrierbar ist und deshalb ein ungenügend gereinigtes Polyether/Polyol ergibt.

Polyether/Polyole mit Restalkaligehalten von kleiner als 2 ppm können beispielsweise nach Angaben der DE-PS Nr. 2208614 erhalten werden, wenn man die basischen Katalysatoren in Gegenwart von basischen Magnesiumsalzen mit Kohlensäure ausfällt.

Aus den genannten Gründen können ohne langwierige kostspielige Nachbehandlung der rohen Polyether/Polyole keine alkalifreie, reine Polyether/Polyole erhalten werden, wie sie üblicherweise zur Herstellung von Polyurethan- und Polyisocyanuratkunststoffen verwendet werden.

Nach Angaben der deutschen Patentanmeldung P Nr. 3006634.3 können rohe Polyether/Polyole mit einem Alkaliionengehalt von 0,002 bis 1 Gew.-% zur Herstellung von isocyanuratgruppenhaltigen, gegebenenfalls geschäumten Polyurethanen verwendet werden. Die rohen Polyether/Polyole katalysieren jedoch aufgrund ihrer Basizität die Isocyanuratbildung relativ stark und bilden während der Lagerung vereinzelt Sediment, so dass eine reproduzierbare Verarbeitung zu Kunststoffen gelegentlich erschwert wird.

Die Aufgabe der vorliegenden Erfindung bestand darin, die obengenannten Nachteile zu beseitigen und rohe Polyether/Polyole ohne kostspielige Nachbehandlung in der Polyurethanchemie, insbesondere zur Herstellung von massiven urethangruppenhaltigen Polyisocyanuraten, nutzbar zu machen.

Diese Aufgabe konnte überraschenderweise gelöst werden durch Polyether/Polyol- Mischungen, die als Zusatzmittel Fettsäureester oder deren Gemische in bestimmten Mengen enthalten.

Gegenstand der Erfindung sind somit Polyether/Polyol-Mischungen aus reinen und rohen Polyether/Polyolen, die 0,002 bis 0,05 mol eines Fettsäureesters oder Fettsäureestergemisches aus der Gruppe von Leinöl, Rizinusöl, Erdnussöl, Tallölfettsäureester und Triethanolaminmonoölsäureester pro 100 g Polyether/Polyol-Mischung enthalten.

Durch den Zusatz der Fettsäureester wird eine optimale Vermischung der reinen und rohen Polyether/Polyole ermöglicht und die Lagerstabilität der Polyether/Polyol-Mischungen, insbesondere bei Verwendung von Triethanolaminmonoölsäureester als Fettsäureester, verbessert.

Die Verwendung der erfindungsgemässen Polyether/Polyol-Mischungen zur Herstellung von urethangruppenhaltigen, geschäumten und vorzugsweise massiven Polyisocyanuratmassen ergibt ausserdem folgenden vorteilhaften Effekt:

Durch die Fettsäureester wird einerseits eine Verlangsamung der Isocyanuratbildung bei der Umsetzung mit organischen Polyisocyanaten bewirkt, andererseits sind die erfindungsgemässen Polyether/Polyol-Mischungen noch so reaktiv, dass auf eine zusätzliche Mitverwendung von üblichen Trimerisierungskatalysatoren verzichtet werden kann.

Rohe Polyether/Polyole sind billiger als reine Polyether/Polyole, da der Neutralisations- und Reinigungsschritt entfällt. Die erfindungsgemässen Polyether/Polyol-Mischungen zeigen auch nach längeren Lagerzeiten kein Sediment. Es werden keine niedermolekularen ein- oder mehrwertiger Alkohole als Lösungsmittel für die Trimerisierungskatalysatoren benötigt und somit die thermischen und mechanischen Eigenschaften der erhaltenen Formkörper nicht negativ beeinflusst.

Unter rohen Polyether/Polyolen im Sinne der Erfindung sind die ungereinigten alkalihaltigen Polyether/Polyole zu verstehen, wie sie bei der Polymerisation von Alkylenoxiden mit Startermolekülen in Gegenwart von Alkalihydroxiden und/oder -alkoholaten als Katalysatoren anfallen, bevor die Reaktionslösung neutralisiert wird. Derartige rohe Polyether/Polyole besitzen üblicherweise Gehalte an Alkaliionen, beispielsweise an Natrium- und/oder vorzugsweise Kaliumionen, von 0,002 bis 1,0, vorzugsweise 0,05 bis 0,4 Gew.-%, bezogen auf das Gesamtgewicht, und weisen Molekulargewichte von 500 bis 8000, vorzugsweise von 2000 bis 7000 auf.

Reine Polyether/Polyole im Sinne der Erfindung sind die handelsüblichen Polyether/Polyole, die vorzugsweise Restalkaligehalte von kleiner als 10 ppm besitzen und durch Reinigung nach bekannten Methoden der obengenannten rohen Polyether/Polyole erhalten werden.

Die reinen und rohen Polyether/Polyole werden nach bekannten Verfahren aus einem oder mehreren Alkylenoxiden mit 2 bis 4 Kohlenstoffatomen im Alkylenrest und einem Startermolekül, das 2 bis 8, vorzugsweise 2 bis 4 aktive Wasserstoffatome enthält in Gegenwart von Alkalihydroxiden und/oder -alkoholaten als Katalysatoren hergestellt.

Geeignete Alkylenoxide sind beispielsweise 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diaminodiphenylmethan. Von den Verbindungen der erwähnten Gruppe sind besonders interessant N,N,N',N'-Tetrakis-(2-hydroxyethyl)ethylendiamin, N,N,N',N'-Tetrakis-(2-hydroxypropyl)ethylendiamin, N,N,N',N'',N''-Pentakis-(2-hydroxypropyl)triamin, Phenyldiisopropanolamin und höhere Alkylenoxidaddukte von Anilin.

Als Startermoleküle kommen ferner in Betracht: Alkanolamine, wie Ethanolamin, Diethanolamin, N-Methyl- und N-Ethylethanolamin, N-Methyl- und N-Ethyldiethanolamin und Triethanolamin, Ammoniak, Hydrazin und Hydrazide. Vorzugsweise verwendet werden mehrwertige, insbesondere zwei- und/oder dreiwertige Alkohole, wie Ethylenglykol, Propylenglykol-1,2 und -1,3, Diethylenglykol, Dipropylenglykol, Butylenglykol-1,4, Hexamethylenglykol-1,6, Glycerin, Trimethylolpropan und Pentaerythrit.

Gebräuchliche Katalysatoren sind Alkalialkoxide mit 1 bis 4 Kohlenstoffatomen im Alkylrest, wie Natrium- und Kaliummethylat, Natrium- und Kaliumethylat, Kaliumisopropylat und Natriumbutylat und vorzugsweise Alkalihydroxide, wie Natriumhydroxid und vorzugsweise Kaliumhydroxid. Der Katalysator wird üblicherweise in einer Menge von 0,002 bis 1,0, vorzugsweise von 0,01 bis 0,5 Gew.-%, bezogen auf das Gesamtgewicht der Ausgangskomponenten verwendet.

Zur Herstellung der erfindungsgemässen Polyether/Polyol-Mischungen können die reinen und rohen Polyether/Polyole in breiten Mengenverhältnissen gemischt werden. Besonders bewährt und daher vorzugsweise verwendet werden Polyether/Polyol-Mischungen aus 1 bis 50 Gew.-%, insbesondere 20 bis 40 Gew.-% reinen Polyether/Polyolen und 50 bis 99 Gew.-%, insbesondere 60 bis 80 Gew.-% rohen Polyether/Polyolen, wobei die Gew.-% bezogen sind auf das Gesamtgewicht der Polyether/Polyole.

Als geeignete Fettsäureester seien beispielhaft genannt: Leinöl, Rizinusöl, Erdnussöl, Tallölfettsäureester und Triethanolaminmonoölsäureester sowie Gemische der genannten Fettsäureester. Vorzugsweise verwendet wird Triethanolaminmonoölsäureester.

Die Fettsäureester und Fettsäureestergemische werden in solchen Mengen verwendet, dass die erfindungsgemässen Polyether/Polyol-Mischungen 0,002 bis 0,05 mol, vorzugsweise 0,01 bis 0,05 mol/100 g Polyether/Polyol-Mischung enthalten.

Zur Herstellung der geschäumten oder vorzugsweise massiven urethangruppenhaltigen Polyisocyanuratmassen eignen sich aliphatische, cycloaliphatische, araliphatische und vorzugsweise aromatische Isocyanate mit einer Funktionalität von mindestens zwei:

Im einzelnen seien beispielhaft genannt: Alkylendiisocyanate mit 4 bis 12 Kohlenstoffatomen im Alkylenrest, wie 1,12-Dodecandiisocyanat, Tetramethylendiisocyanat-1,4 und vorzugsweise Hexamethylendiisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethylcyclohexan (Isophorondiisocyanat), 2,4- und 2,6-Hexahydrotoluylendiisocyanat sowie entsprechende Isomerengemische, 4,4'-, 2,2'- und 2,4'-Dicyclohexylmethandiisocyanat sowie die entsprechenden Isomerengemische und vorzugsweise aromatische Di- und Polyisocyanate wie 4,4'-, 2,4'- und 2,2'-Diisocyanatodiphenylmethan und die entsprechenden Isomerengemische, 2,4- und 2,6-Diisocyanatonaphtalin, Polyphenylpolymethylenpolyisocyanate, 2,4,6-Triisocyanatotoluol und vorzugsweise Gemische aus Diphenylmethandiisocyanaten und Polyphenylpolymethylenpolyisocyanaten (Roh-MDI). Die genannten Di- und Polyisocyanate können einzeln oder in Form von Mischungen eingesetzt werden. Häufig werden auch sogenannte modifizierte mehrwertige Isocyanate, d.h. Produkte, die durch chemische Umsetzung obiger Di- und/oder Polyisocyanate erhalten werden, verwendet. Als modifizierte organische Di- und Polyisocyanate kommen beispielsweise in Betracht: Carbodiimidgruppen aufweisende Polyisocyanate gemäss DE-PS Nr. 1092007, Allophanatgruppen aufweisende Polyisocyanate, wie sie z.B. in der britischen Patentschrift Nr. 994890, den ausgelegten Unterlagen des belgischen Patents Nr. 761626 und der NL-OS Nr. 7102524 beschrieben werden, Isocyanuratgruppen aufweisende Polyisocyanate, wie sie z.B. in den DE-PS Nrn. 1022789, 1222067 und 1027394 sowie den DE-OS Nrn. 1929034 und 2004048 beschrieben werden, Urethangruppen aufweisende Polyisocyanate, wie sie z.B. in den ausgelegten Unterlagen des belgischen Patents Nr. 752261 oder der US-PS Nr. 3394164 beschrieben werden, acylierte Harnstoffgruppen aufweisende Polyisocyanate, z.B. gemäss DE-PS Nr. 1230778, Biuretgruppen aufweisende Polyisocyanate, z.B. gemäss DE-PS Nr. 1101394 und GB-PS Nr. 889050; durch Telomerisationsreaktionen hergestellte Polyisocyanate, z.B. entsprechend den ausgelegten Unterlagen des belgischen Patents Nr. 723640, Estergruppen aufweisende Polyisocyanate, wie sie z.B. in der GB-PS Nrn. 965474 und 1072956, der US-PS Nr. 3567765 und der DE-PS Nr. 1231688 genannt werden.

Vorzugsweise kommen jedoch zur Anwendung: urethangruppenhaltige Polyisocyanate, beispielsweise mit niedermolekularen Diolen, Triolen oder Polypropylenglykolen, modifiziertes 4,4'-Diphenylmethandiisocyanat oder Toluylendiisocyanat, Carbodiimidgruppen und/oder Isocyanuratringe enthaltende Polyisocyanate, z.B. auf Diphenylmethandiisocyanat und/oder Toluylendiisocyanatbasis und insbesondere Toluylendiisocyanate, Diphenylmethandiisocyanate, Mischungen aus Diphenylmethandiisocyanaten und Polyphenylpolymethylenpolyisocyanaten (Roh-MDI) und Gemische aus Toluylendiisocyanaten und Roh-MDI.

Der Reaktionsmischung können gegebenenfalls auch noch Hilfs- und Zusatzstoffe einverleibt werden. Genannt seien beispielsweise Polyurethankatalysatoren, Zellregler, Füllstoffe, Farbstoffe, Pigmente, Flammschutzmittel, fungistatische und bakteriostatisch wirkende Substanzen.

Zusätzlich zu den die Trimerisierung der Isocyanatgruppen bewirkenden Polyether/Polyol-Mischungen können noch weitere, die Urethanreaktion beschleunigende Katalysatoren mitverwendet werden. In Betracht kommen beispielsweise tertiäre Amine, wie Dimethylbenzylamin, N,N,N',N'-Tetramethyldiaminoethylether, Bis(dimethylaminopropyl)harnstoff, N-Methylbzw. N-Ethylmorpholin, Dimethylpiperazin, 1,2-Dimethylimidazol, 1-Azobicyclo-(3,3,3)-octan und vorzugsweise Triethylendiamin, Metallsalze, wie Zinndioctoat, Bleioctoat, Zinndiethylhexoat und vorzugsweise Zinn(II)salze und Dibutylzinndilaurat sowie insbesondere Mischungen aus tertiären Aminen und organischen Zinnsalzen. Vorzugsweise verwendet werden 0,1 bis 5,0 Gew.-% Katalysator auf Basis tertiärer Amine und/oder 0,01 bis 1,0 Gew.-% Metallsalze, bezogen auf das Gewicht der Polyether/Polyol-Mischung.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbest, Wollastonit (Kaliumsilikat) und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und vorzugsweise Pfropfpolymerisate auf Styrol/Acrylnitril-Basis, die durch in situ Polymerisation von Acrylnitril/Styrol-Mischungen in Polyetherolen analog den Angaben der deutschen Patentschriften Nrn. 1111394, 1222669 (US Nrn. 3304273, 3383351, 3523093), 1152536 (GB Nr. 1040452) und 1152537 (GB Nr. 987618) hergestellt werden sowie Fillerpolyole, bei denen wässerige Polymerdispersionen in Polyoldispersionen übergeführt werden.

Die anorganischen und organischen Füllstoffe können einzeln oder als Gemische verwendet werden. Vorzugsweise Anwendung finden stabile Füllstoff/Polyol-Dispersionen, bei denen die Füllstoffe in Gegenwart von Polyolen in situ mit hohen örtlichen Energiedichten auf eine Teilchengrösse kleiner als 7 µm zerkleinert und hierbei gleichzeitig dispergiert werden. Füllstoff/Polyol-Dispersionen dieser Art werden beispielsweise in den deutschen Patentanmeldungen P Nrn. 2850609.4, 2850610.7 und 2932304.4 beschrieben.

Die anorganischen und organischen Füllstoffe werden der Reaktionsmischung vorteilhafterweise in Mengen von 0,5 bis 50 Gew.-%, vorzugsweise 1 bis 40 Gew.-%, bezogen auf das Gewicht der Polyisocyanat/Polyol-Mischung einverleibt. Geeignete Flammschutzmittel sind beispielsweise Trikresylphosphat, Tris-2-chlorethylphosphat, Trischlorpropylphosphat und Tris-2,3-dibrompropylphosphat.

Ausser den bereits genannten halogensubstituierten Phosphaten können auch anorganische Flammschutzmittel, wie Aluminiumoxidhydrat, Antimontrioxid, Arsenoxid, Ammoniumpolyphosphat und Calciumsulfat sowie Veresterungsprodukte niedermolekularer Polyole und halogenierter Phthalsäurederivate zusätzlich zum Flammfestmachen der urethangruppenhaltigen Polyisocyanurate verwendet werden. Im allgemeinen hat es sich als zweckmässig erwiesen, 5 bis 50 Gew.-Teile, vorzugsweise 5 bis 25 Gew.-Teile der genannten Flammschutzmittel für jeweils 100 Gew.-Teile an organischem Polyisocyanat zu verwenden.

Zur Herstellung der geschäumten und vorzugsweise kompakten urethangruppenhaltigen Polyisocyanurate werden die organischen Polyisocyanate bzw. die modifizierten Polyisocyanate und rohen Polyetherole in solchen Mengenverhältnissen zur Reaktion gebracht, dass pro Hydroxylgruppe 4 bis 60, vorzugsweise 6 bis 40 NCO-Gruppen in der Reaktionsmischung vorliegen.

Die Formkörper werden nach dem Präpolymer- und vorzugsweise dem one-shot-Verfahren hergestellt. Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem Zweikomponentenverfahren zu arbeiten und die Zusatzstoffe mit der Polyether/Polyol-Mischung zu der Komponente A zu vereinigen und als Komponente B die organischen Polyisocyanate zu verwenden.

Die Mengen des in die Form eingebrachten Reaktionsgemisches wird so bemessen, dass die erhaltenen kompakten Formkörper eine Dichte von 1,0 bis 1,3 g/cm³ aufweisen. Die Ausgangskomponenten werden mit einer Temperatur von 15 bis 80° C, vorzugsweise von 20 bis 65° C, in die Form eingebracht. Die Formtemperatur beträgt zweckmässigerweise 20 bis 90° C, vorzugsweise 30 bis 85° C, gegebenenfalls kann es vorteilhaft sein, übliche Formtrennmittel, beispielsweise auf Wachs- oder Silikonbasis, zur Verbesserung der Entformung einzusetzen.

Die nach dem erfindungsgemässen Verfahren erhältlichen kompakten urethangruppenhaltigen Polyisocyanuratmassen eignen sich beispielsweise zur Verwendung als Maschinengehäuse.

Die in den Beispielen genannten Teile beziehen sich auf das Gewicht.

Beispiel 1

*Herstellung der Polyether/Polyol-Mischung*

60 Teile eines rohen Polyethers/Polyols mit einem Molekulargewicht von 5000 auf Basis Glycerin, Propylenoxid und Ethylenoxid und einem Kaliumgehalt von 0,19 Gew.-%, das nach der anionischen Polymerisation mit Kalium nicht neutralisiert wurde, 40 Teile eines handelsüblichen reinen Polyethers/Polyols gleichen Typs mit einem Kaliumgehalt von ungefähr 1 ppm, und 5,2 Teile (0,013 mol) Triethanolaminmonoölsäureester werden in einem geschlossenen Reaktionsgefäss bei Raumtemperatur in 30 min gemischt, danach auf 80° C erwärmt und 90 min bei ungefähr 1,3 mbar unter Rühren entgast und schliesslich auf Raumtemperatur abgekühlt.

Beispiel 2

Man verfährt analog Beispiel 1, verwendet jedoch anstelle von 5,2 Teilen 12,4 Teile (0,03 mol) Triethanolaminmonoölsäureester.

Vergleichsbeispiel A 1

Man verfährt analog Beispiel 1, verwendet jedoch lediglich 3,7 Teile (0,009 mol) Triethanolaminmonoölsäureester.

Vergleichsbeispiel A 2

Verfährt man analog Beispiel 1, verwendet jedoch zusätzlich keinen Fettsäureester, so kann die Polyether/Polyol-Mischung nicht mehr mit Polyisocyanat homogen vermischt werden, da das Reaktionsgemisch sofort geliert, den Rührer blockiert und Klumpen ausscheidet.

Beispiel 3

*Herstellung von urethangruppenhaltigen Polyisocyanuraten*

Die Polyether/Polyol-Mischungen nach den Beispielen 1 und 2 und dem Vergleichsbeispiel A 1 werden jeweils mit einem entgasten Gemisch aus Diphenylmethandiisocyanaten und Polyphenylpolymethylenpolyisocyanaten (Roh-MDI; Viskosität bei 25° C ungefähr 100 mPa · s) in einem Mischungsverhältnis von 1:1,66 Gew.-Teilen 10 s lang vermischt und auf eine auf 60°C temperierte Aluminiumplatte gegossen. An den Proben ermittelt wurden das makroskopisch bestimmte Ende der Topfzeit (Fliessfähigkeit) und durch Messungen der Reaktionswärme der Gelpunkt. Die erhaltenen Ergebnisse wurden in Abhängigkeit von der Lagerzeit in Tabelle 1 zusammengefasst.

*Tabelle 1*

Topfzeit und Gelpunkt von Polyisocyanuratsystemen in Abhängigkeit vom Zusatz an Triethanolaminmonoölsäureester und von der Lagerdauer

| Polyether/ Polyol- Mischung nach Lagerzeit (d) | Vergleichs- beispiel A 1 | | Beispiel 1 | | Beispiel 2 | |
|---|---|---|---|---|---|---|
| | Topf- zeit (s) | Gel- punkt (s) | Topf- zeit (s) | Gel- punkt (s) | Topf- zeit (s) | Gel- punkt (s) |
| 1 | zu reaktiv, nicht verarbeitbar | | 25 | 28 | 40 | 40 |
| 5 | | | 30 | 34 | 40 | 41 |
| 10 | | | 32 | 39 | 40 | 45 |
| 28 | | | 38 | 41 | 45 | 46 |
| 100 | | | 48 | 52 | — | — |

Die Tabelle 1 zeigt, dass gemäss Vergleichsbeispiel A 1 durch Zusatz von 0,009 mol Triethanolaminmonoölsäureester/100 g einer Mischung aus rohen und reinen Polyether/Polyolen im Gewichtsverhältnis 60:40 die Reaktionsfähigkeit nicht ausreichend vermindert werden kann, während die Polyether/Polyol-Mischungen gemäss den Beispielen 1 und 2 sehr gut verarbeitbar sind und sich ihre Reaktivität auch bei längerer Lagerung nur geringfügig ändert.

*Beispiel 4*

*Herstellung der Polyether/Polyol-Mischungen*

Eine Polyether/Polyol-Mischung wie in Beispiel 1 beschrieben aus 60 Teilen eines rohen Polyethers/Polyols mit einer OH-Zahl von 35 und 40 Teilen eines reinen Polyethers/Polyols des gleichen Typs werden mit 2,5 Teilen (0,003 mol) Leinöl vermischt, innerhalb 30 min auf 80°C erwärmt, dann 90 min bei 1,3 mbar unter Rühren entgast und auf Raumtemperatur abgekühlt.

*Beispiel 5*

Man verfährt analog Beispiel 4, verwendet jedoch als Zusatz 5 Teile (0,006 mol) Leinöl.

*Vergleichsbeispiel B*

Man verfährt analog Beispiel 4, verwendet jedoch lediglich 1 Teil (0,001 mol) Leinöl als Zusatz.

*Beispiel 6*

*Herstellung von urethangruppenhaltigen Polyisocyanuraten*

100 Teile Polyether/Polyol-Mischung nach den Beispielen 4 und 5 und Vergleichsbeispiel B werden jeweils mit 166 Teilen Roh-MDI 10 s lang intensiv verrührt und die Mischung auf eine 60°C warme Aluminiumplatte gegossen. An den Proben wird die Topfzeit und der Zeitpunkt der Durchhärtung (Ablösung der Aluminiumplatte von der Probenoberfläche; Biegbarkeit um 90°) bestimmt. Die erhaltenen Werte in Abhängigkeit von der Lagerzeit wurden in Tabelle 2 zusammengefasst.

*Tabelle 2*

Topfzeit und Durchhärtung von Polyisocyanuratsystemen in Abhängigkeit vom Zusatz an Leinöl und der Lagerzeit

| Polyether/ Polyol- Mischung nach Lagerzeit (d) | Vergleichs- beispiel B | | Beispiel 4 | | Beispiel 5 | |
|---|---|---|---|---|---|---|
| | Topf- zeit (s) | Durch- härtung (s) | Topf- zeit (s) | Durch- härtung (s) | Topf- zeit (s) | Durch- härtung (s) |
| 1 | zu reaktiv, nicht verarbeitbar | | 24 | 75 | 26 | 95 |
| 4 | ca. 4 | | 26 | 80 | 26 | 100 |
| 25 | 30 | 80 | 25 | 80 | 32 | 110 |
| 50 | 60 | 180 | — | — | — | — |

Tabelle 2 zeigt, dass durch Zusatz von 0,001 mol Leinöl/100 g Polyether/Polyol-Mischung die Reaktivität innerhalb einer Lagerzeit von 4 d nicht wirksam reduziert werden kann. Andererseits zeigt das Beispiel 5 eine deutliche Verlangsamung der Durchhärtung bei Verdoppelung der Leinölmenge gegenüber Beispiel 4.

*Vergleichsbeispiel C*

97,78 Teile eines reinen Polyethers/Polyols mit einer OH-Zahl von 35 und einem Molekulargewicht von 5000 auf Basis von Glycerin/Propylenoxid/Ethylenoxid und 1,0 Teil Kaliumoleat, gelöst in 1,22 Teilen Dipropylenglykol, werden, wie in Beispiel 1 beschrieben, gemischt und entgast.

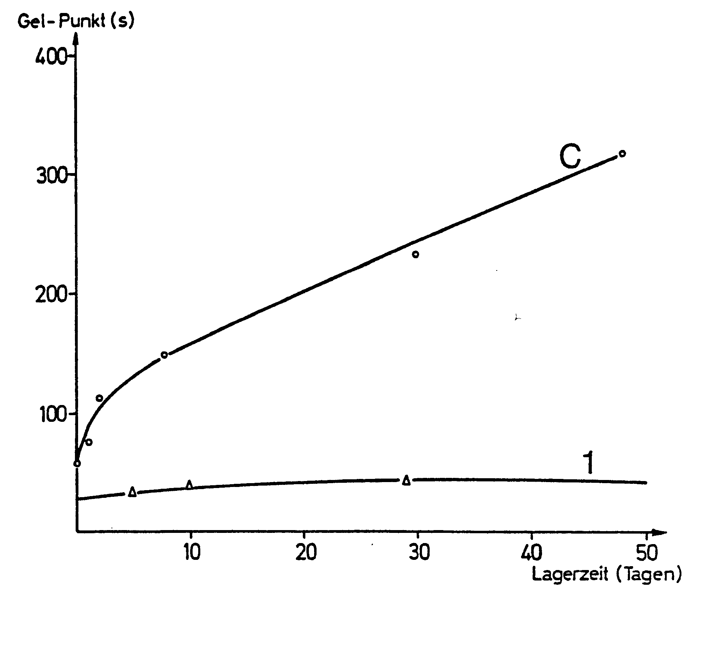

Die Mischung wird in einem Gewichtsverhältnis von 1,0:1,66 mit ebenfalls entgastem Roh-MDI, wie in Beispiel 3 beschrieben, vermischt und aus dem Verlauf der Reaktionstemperaturkurve der Gelpunkt (s) bestimmt. Seine Änderung in Abhängigkeit von der Lagerdauer (d) zeigt die Abbildung.

Zum Vergleich sind die in Beispiel 1 gefundenen Messwerte aufgetragen.

*Beispiel 7*

Analog den Angaben von Beispiel 1 wird eine Polyether/Polyol-Mischung aus 75 Gew.-Teilen rohem und 25 Gew.-Teilen reinem Polyether/Polyol unter Zusatz von 7,5 Gew.-Teilen (0,02 mol) Triethanolaminmonoölsäureester hergestellt.

100 Gew.-Teile der erhaltenen Mischung werden mit 250 Gew.-Teilen Polyisocyanat, wie in Beispiel 3 beschrieben, gemischt und die Topfzeit und der Gelpunkt bestimmt. Die erhaltenen Werte nach einer Lagerzeit der Polyether/Polyol-Mischung von 3 und 10 d sind in Tabelle 3 zusammengefasst.

*Beispiel 8*

Man verfährt analog Beispiel 7, verwendet jedoch eine Polyether/Polyol-Mischung aus 67,5 Gew.-Teilen rohem und 32,5 Gew.-Teilen reinem Polyether/Polyol.

### Tabelle 3
#### Topfzeit und Gelpunkt

| Beispiele | Lagerzeit (d) | Topfzeit (s) | Gelpunkt (s) |
|-----------|---------------|--------------|--------------|
| 7 | 3 | 39 | 40 |
|   | 10 | 46 | 53 |
| 8 | 3 | 54 | 55 |
|   | 10 | 65 | 78 |

*Beispiele 9 bis 12 und Vergleichsbeispiele D bis L*

Polyether/Polyol-Mischungen, hergestellt analog den Angaben von Beispiel 1 aus 60 Teilen eines rohen Polyethers/Polyols mit einem Molekulargewicht von 5000 auf Basis Glycerin, Propylenoxid und Ethylenoxid und einem Kaliumgehalt von 0,19 Gew.-%, das nach der anionischen Polymerisation mit Kalium nicht neutralisiert wurde, 40 Teile eines handelsüblichen reinen Polyethers/Polyols gleichen Typs mit einem Kaliumgehalt von ungefähr 1 ppm, und erfindungsgemässen (Beispiele 9 bis 12) und nicht erfindungsgemässen Fettsäureestern (Vergleichsbeispiele D bis L), werden gemäss Beispiel 3 umgesetzt und nach verschiedenen Lagerzeiten die Topfzeit und der Gelpunkt bestimmt. Die erhaltenen Ergebnisse sind in Tabelle 4 zusammengefasst.

Die Vergleichsbeispiele zeigen, dass neben einer zu starken Verlangsamung der Isocyanuratisierungsreaktion auch Schäumreaktionen — trotz der Abwesenheit von Wasser oder organischen Treibmitteln — auftreten, so dass diese Zusatzmittel insbesondere zur Herstellung von massiven Polyisocyanuratmaterialien nicht geeignet sind.

### Tabelle 4
#### Topfzeit und Gelpunkt von Polyisocyanuratsystemen in Abhängigkeit von Fettsäureester und der Lagerzeit

| Beispiele Vergleichsbeispiele | Fettsäureester Art | Menge (Gew.-%) in der Polyether/ Polyol-Mischung | Lagerzeit (d) | Topfzeit (s) | Gelpunkt (s) |
|---|---|---|---|---|---|
| 9 | Rizinusöl | 7,5 | 1 | 35 | 35 |
|   |   |   | 12 | 48 | 49 |
| 10 | Tallölfettsäureisooctylester | 7,5 | 1 | 32 | 34 |
|    |   |   | 12 | 51 | 55 |
| 11 | Tallölfettsäureäthylhexylester | 7,5 | 1 | 31 | 34 |
|    |   |   | 12 | 58 | 59 |
| 12 | Triethanolaminmonoölsäureester | 7,5 | 3 | 32 | 37 |
|    |   |   | 10 | 39 | 41 |
|    |   |   | 21 | 48 | 50 |

*Tabelle 4 (Fortsetzung)*

| Beispiele Vergleichsbeispiele | Fettsäureester Art | Menge (Gew.-%) in der Polyether/ Polyol-Mischung | Lagerzeit (d) | Topfzeit (s) | Gelpunkt (s) |
|---|---|---|---|---|---|
| D | Tallöl | 7,5 | 3 | 180 | — |
| | | | | schäumt stark | |
| E | Türkischrotöl (entwässert) | 7,5 | 3 | 120 | — |
| | | | | schäumt stark | |
| F | Rizinolsäureölsäureester | 5,63 | 1 | 45 | 62 |
| | | | | schäumt stark | |
| | | | 13 | 51 | 74 |
| | | | | schäumt stark | |
| G | Rizinolsäureölsäureester | 11,26 | 1 | 150 | — |
| | | | | schäumt stark | |
| H | Dodecenylbernsteinsäuredimethyl- aminopropylamid | 7,5 | 2 | 150 | — |
| | | | | keine Härtung | |
| J | Ölsäuredimethylaminopropylamid | 3,67 | 1 | 42 | 48 |
| K | Ölsäuredimethylaminopropylamid | 7,33 | 1 | 47 | 72 |
| | | | | schäumt schwach | |
| | | | 13 | 66 | 124 |
| | | | | schäumt stark | |
| L | Alkenyl($C_{12-14}$)bernsteinsäurealkyl- ($C_{13-15}$)ester | 7,5 | 1 | 180 | — |

## Patentansprüche

1. Polyether/Polyol-Mischungen aus reinen und rohen Polyether/Polyolen, enthaltend 0,002 bis 0,05 mol eines Fettsäureesters oder Fettsäureestergemisches aus der Gruppe von Leinöl, Rizinusöl, Erdnussöl, Tallölfettsäureester und Triethanolaminmonoölsäureester pro 100 g Polyether/Polyol-Mischung.

2. Polyether/Polyol-Mischungen nach Anspruch 1, enthaltend 0,01 bis 0,05 mol Triethanolaminmonoölsäureester pro 100 g Polyether/ Polyol-Mischung.

3. Polyether/Polyol-Mischungen nach Anspruch 1 aus 1 bis 50 Gew.-% eines reinen Polyethers/Polyols und 50 bis 99 Gew.-% eines rohen Polyethers/Polyols, bezogen auf das Gesamtgewicht der Polyether/Polyole.

4. Verwendung der Polyether/Polyol-Mischungen zur Herstellung von massiven Polyisocyanuratmassen.

## Claims

1. Polyether-polyol mixtures of pure and crude polyether-polyols, containing from 0.002 to 0.05 mol of a fatty acid ester selected from the group consisting of linseed oil, castor oil, peanut oil, tall oil fatty acid ester and triethanolamine monooleic acid ester, or of a mixture of such esters, per 100 g of polyether-polyol mixture.

2. Polyether-polyol mixtures as claimed in claim 1, containing from 0.01 to 0.05 mol of triethanolamine monooleic acid ester per 100 g of polyether-polyol mixture.

3. Polyether-polyol mixtures as claimed in claim 1, containing, based on the total weight of the polyether-polyols, from 1 to 50% by weight of a pure polyether-polyol and from 50 to 99% by weight of a crude polyether-polyol.

4. The use of the polyether-polyol mixtures for the production of dense polyisocyanurate compositions.

## Revendications

1. Mélanges de polyéther/polyols, formés de polyéther/polyols purs et bruts et contenant 0,002 à 0,05 mol d'un ester d'acide gras ou d'un mélange d'esters d'acides gras choisi(s) parmi l'huile de lin, l'huile de ricin, l'huile d'arachides, un ester d'acide gras de l'huile de pin et le monooléate de triéthanolamine pour 100 g de mélange de polyéther/polyols.

2. Mélanges de polyéther/polyols suivant la revendication 1, contenant 0,01 à 0,05 mol de monooléate de triéthanolamine pour 100 g de mélange de polyéther/polyols.

3. Mélanges de polyéther/polyols suivant la revendication 1, formés de 1 à 50% du poids total des polyéther/polyols d'un polyéther/polyol pur et de 50 à 99% du poids total des polyéther/polyols d'un polyéther/polyol brut.

4. Utilisation de ces mélanges de polyéther/polyols pour la préparation de masses massives de polyisocyanurates.